# EUROPÄISCHE PATENTSCHRIFT

(11) **EP 2 154 769 B1**
(45) Veröffentlichungstag und Bekanntmachung des Hinweises auf die Patenterteilung: **26.02.2014**
(21) Anmeldenummer: 08014307.6
(22) Anmeldetag: 11.08.2008
(51) Int. Cl.: H02K 7/02

(54) **Anordnung zur Leistungszuführung an ein System**
Device for supplying power to a system
Dispositif d'alimentation en puissance sur un système

(43) Veröffentlichungstag der Anmeldung: 17.02.2010
(73) Patentinhaber: Siemens Aktiengesellschaft, 80333 München (DE)
(72) Erfinder: Krejtschi, Jürgen, Dr., 90478 Nürnberg (DE); Schäfers, Elmar, Dr., 90763 Fürth (DE); Stoiber, Dietmar, Dr., 90763 Fürth (DE)

(56) Entgegenhaltungen:
- WO-A-02/061910
- GB-A- 2 393 337
- US-A- 4 460 834
- US-A- 5 646 458
- US-A1- 2004 256 929
- US-A1- 2006 061 334

## Beschreibung

Die Erfindung betrifft eine Anordnung zur Leistungszuführung an ein System mit einem System, welches mechanische Leistung aufnimmt, mit einer elektrischen Antriebsmaschine, welche mechanische Leistung an das System abgibt und mit einem kinetischen Energiespeicher, welcher eine erste elektrische Maschine aufweist, die mit der elektrischen Antriebsmaschine elektrisch verbunden ist.

Bei einer Vielzahl von Produktions- und auch Werkzeugmaschinenanwendungen treten Prozessabschnitte auf, die dadurch gekennzeichnet sind, dass in bestimmten Phasen kurzfristig hohe Leistungen zugeführt werden müssen, während in anderen Prozessphasen lediglich geringere Leistungen oder Ströme bzw. Drehmomente zuzuführen sind.

Bisher verwendete Verfahren zum Betrieb, insbesondere zur Bewegungsführung, von Produktions- oder Werkzeugmaschinen berücksichtigen die unterschiedlichen Merkmale verschiedener Prozessabschnitte nicht und führen die erforderliche Leistung während aller Prozessphasen beispielsweise mittels eines Umrichters zu. Nachteilig sind hierbei die hohen Kosten, die mit der umrichtergeregelten Zustellung von hohen Leistungen verbunden sind.

Aus diesem Grund wurden derartige Prozesse bisher mit einem kinetischen Energiespeicher, z.B. einem Schwungrad mechanisch direkt verbunden, welcher Leistungsspitzen glätten und somit vom elektrischen Antriebssystem fernhalten kann. Nachteilig ist, dass derartige Anordnungen nahezu keine Drehzahländerung zulassen und somit für dynamische Prozesse ungeeignet sind. Die US 4,460 834 B zeigt eine unterbrechungsfreie Spannungsversorgung mit einem Schwungrad als kinetischem Energiespeicher. Als Verbindung zwischen der dortigen Antriebsmaschine und dem kinetischen Energiespeicher ist eine mechanische Verbindung, nämlich in an sich bekannter Art und Weise eine von der Antriebsmaschine in Rotation versetzte Welle vorgesehen. Zusätzlich zu dem kinetischen Energiespeicher ist in der US 4,460 834 B als Notstromaggregat ein von einem Dieselmotor angetriebener Generator vorgesehen, dessen Ausgang an die Stelle einer externen elektrischen Energiequelle tritt, wenn diese ganz oder teilweise ausfällt. Die US 5,646,458 B zeigt ebenfalls eine unterbrechungsfreie Spannungsversorgung mit einem Schwungrad als kinetischem Energiespeicher. Hier ist anstelle der mechanischen Verbindung zwischen Antriebsmaschine und Energiespeicher eine elektrische Verbindung vorgesehen. Dabei wird der Ausgang des Energiespeichers über einen Gleichrichter dem der Antriebsmaschine vorgeschalteten Umrichter zugeführt.

Die Aufgabe der vorliegenden Erfindung ist es, eine Anordnung zur Leistungszuführung an ein System bereitzustellen, welche für dynamische Prozesse geeignet ist und mit welcher kostengünstig auch hohe Leistungen bereitgestellt werden können.

Diese Aufgabe wird mit den Merkmalen des Patentanspruchs 1 gelöst. Vorteilhafte Weiterbildungen sind den Unteransprüchen zu entnehmen.

Die erfindungsgemäße Anordnung zur Leistungszuführung an ein System weist auf
- ein System, welches mechanische Leistung aufnimmt,
- eine elektrische Antriebsmaschine, welche mechanische Leistung an das System abgibt,
- einen kinetischen Energiespeicher, welcher eine erste elektrische Maschine aufweist, die mit der elektrischen Antriebsmaschine elektrisch verbunden ist, und welcher eine Speisemaschine aufweist, die dem kinetischen Energiespeicher kontinuierlich mechanische Energie zuführt.

Erfindungsgemäß gibt der kinetische Energiespeicher seine gespeicherte kinetische Energie über die erste elektrische Maschine und die elektrische Antriebsmaschine an das System ab.

Dabei ist die elektrische Antriebsmaschine, welche ihre mechanische Leistung an das System abgibt, direkt elektrisch mit der ersten elektrischen Maschine des kinetischen Energiespeichers verbunden, und zwar, da sowohl die elektrische Antriebsmaschine als auch die erste elektrische Maschine des kinetischen Energiespeichers jeweils eine Ständerwicklung aufweisen, indem die beiden Ständerwicklungen der elektrischen Antriebsmaschine und der ersten elektrischen Maschine direkt elektrisch verbunden sind.

Unter dem Begriff 'System' sind sämtliche Maschinenanwendungen bzw. Maschinen zu verstehen, in welchen Prozesse, z.B. Verarbeitungsprozesse, oder Verfahren, z.B. Herstellungsverfahren, ablaufen. Ein derartiges System ist beispielsweise eine Werkzeugmaschine, eine Produktionsmaschine oder ein Bearbeitungszentrum.

Kerngedanke der Erfindung ist eine verschleißfreie energetische Kopplung des kinetischen Energiespeichers an die elektrische Antriebsmaschine, welche die antreibende Maschine des Systems darstellt, welche zudem eine variable Drehzahlregelung der elektrischen Antriebsmaschine bei gleichzeitiger Minimierung der notwendigen Umrichterkapazität erlaubt.

In einer bevorzugten Ausgestaltung der Erfindung stellen die elektrische Antriebsmaschine und die erste elektrische Maschine des kinetischen Energiespeichers eine Kombination aus Synchronmaschine und Asynchronmaschine dar. Es ist entweder die elektrische Antriebsmaschine als Synchronmaschine und die erste elektrische Maschine des kinetischen Energiespeichers als Asynchronmaschine oder die Antriebsmaschine als Asynchronmaschine und die erste elektrische Maschine als Synchronmaschine ausgebildet. Wichtig ist, dass eine Kombination von Synchron- und Asynchronmaschine angeordnet ist.

Die erforderliche mechanische Leistung wird dem System bzw. dem darin ablaufenden Prozess, wie beispielsweise einem Umformprozess, über einen oder mehrere elektrische Antriebsmaschinen zugestellt. Das System, d.h. der darin ablaufende Prozess weist Prozessabschnitte auf, in denen sehr hohe Leistungen benötigt werden. Hohe Leistungen sind solche Leistungen, die über der durchschnittlich benötigten Leistung des Systems bzw. des Prozesses liegen.

Um hohe Leistungen von einem Netz, welches insbesondere ein dreiphasiges Netz (Drehstromnetz) ist, fernzuhalten, ist die erfindungsgemäße Anordnung mit einer systeminternen Energiepufferung ausgestattet. Die erfindungsgemäße Anordnung erlaubt es zudem, die notwendige Umrichterkapazität zur Bewältigung hoher Leistungen zu reduzieren.

Vorzugsweise weist die elektrische Antriebsmaschine eine variable Drehzahlregelung auf. Dabei ist insbesondere ein Umrichter zur variablen Drehzahlregelung der elektrischen An-triebsmachine vorgesehen. Mittels des Umrichters ist vorteilhafterweise eine elektrische Frequenz der als Schleifringläufer ausgeführten elektrischen Asynchronmaschine einstellbar.

Da die elektrische Antriebsmaschine und die erste elektrische Maschine des kinetischen Energiespeichers direkt elektrisch miteinander verbunden sind, ist eine Drehzahlregelung der elektrischen Antriebsmaschine über die Einstellung der elektrischen Frequenz der als Schleifringläufer ausgeführten Asynchronmaschine möglich.

Vorteilhafterweise sind Richtung und Intensität eines Leistungsflusses zwischen elektrischer Antriebsmaschine und erster elektrischer Maschine, d.h. kinetischem Energiespeicher, über eine Verschiebung der elektrischen Frequenz des Schleifringläufers gegenüber einer elektrischen Frequenz der Synchronmaschine mittels des Umrichters variabel einstellbar.

Grundsätzlich erfolgt die Leistungsübertragung vom kinetischen Energiespeicher an die elektrische Antriebsmaschine dadurch, dass die erste elektrische Maschine des Energiespeichers übersynchron zur elektrischen Antriebsmaschine betrieben wird und somit als elektrischer Generator wirkt. Hierdurch wird die kinetisch gespeicherte Energie dem System zugeführt.

Um eine Drehzahlregelung der elektrischen Antriebsmaschine zu erlauben, muss das jeweils notwendige Drehmoment flexibel zur Verfügung gestellt werden können, was bedingt, dass die Schlupffrequenz zwischen Asynchronmaschine und Synchronmaschine flexibel einstellbar ist. Aus diesem Grund ist die Asynchronmaschine vorzugsweise als Schleifringläufer ausgeführt, was erlaubt, die elektrische Rotorfrequenz über einen Umrichter flexibel einzustellen. Der sich aus momentaner Drehzahl der elektrischen Antriebsmaschine und dem für die Drehzahlregelung momentan notwendigen Drehmoment ergebende notwendige Schlupf der Asynchronmaschine kann somit flexibel realisiert werden. Die gespeicherte kinetische Energie kann somit geregelt über die elektrische Antriebsmaschine dem System bzw. dem Prozess zugeführt werden.

Im Gegensatz zu einer mechanischen Lösung, beispielsweise mittels eines Automatikgetriebes, die sehr aufwendig und verschleißbehaftet ist, erfolgt die Lösung gemäß der erfindungsgemäßen Anordnung elektrisch, d.h. über die elektrische und somit verschleißfreie Verbindung von elektrischer Antriebsmaschine und kinetischem Energiespeicher, insbesondere erster elektrischer Maschine des Energiespeichers.

Insbesondere ist mit der erfindungsgemäßen Anordnung ein bidirektionaler Leistungsfluss zwischen dem System und dem kinetischen Energiespeicher realisiert, welcher insbesondere vom System geforderte Leistungsspitzen vom Netz fernhält.

Der kinetische Energiespeicher weist vorzugsweise eine elektrische Speisemaschine auf, welche zur kontinuierlichen Leistungsspeisung des kinetischen Energiespeichers dient. Die elektrische Speisemaschine ist wahlweise ohne Drehzahlregelung direkt an dem Netz oder mit Drehzahlregelung über einen weiteren Umrichter betrieben.

Vorteilhafterweise ist die elektrische Speisemaschine als Asynchronmaschine, insbesondere als Kurzschlussläufer, ausgebildet. Die Ausführung der Speisemaschine als Asynchronmaschine hat den Vorteil, dass diese ungeregelt direkt am Netz betrieben werden kann und hinsichtlich der Dimensionierung lediglich die mittlere Leistung des Prozesses abdecken muss. Der kinetische Energiespeicher wird mit nahezu unveränderlicher Drehzahl betrieben.

Mit der erfindungsgemäßen Lösung muss der vorgesehene Umrichter nun nicht mehr die gesamten benötigen Leistungen an die elektrische Antriebsmaschine, welche mechanische Leistung an das System abgibt, bereitstellen. Die benötigte Leistung wird praktisch auf den Umrichter und die erste elektrische Maschine des kinetischen Energiespeichers aufgeteilt. Die Speisemaschine des kinetischen Energiespeichers stellt dabei dauernd mechanische Leistung bereit.

In einer weiteren bevorzugten Ausgestaltung der Erfindung ist eine Drehzahl des kinetischen Energiespeichers entsprechend den Leistungsanforderungen des Systems und eines notwendigen Drehzahlstellbereichs des Systems in Bezug auf eine Dimensionierung des Umrichters optimal festgelegt.

Zur flexiblen Schlupfeinstellung muss die sich aus der mechanischen Drehfrequenz der Asynchronmaschine ergebende elektrische Frequenz über den Umrichter im Drehzahlbereich der Prozesskennlinie des im System ablaufenden Prozesses verschoben werden. Generell ist hierfür um so mehr Umrichterleistung nötig, je größer der Betrag der Frequenzverschiebung und je größer die dabei vom Prozess angeforderte Leistung ist. Abhängig vom Prozess kann somit durch geeignete Drehzahlfestlegung der elektrischen Asynchronmaschine für eine minimal notwendige Umrichterleistung gesorgt werden. Das bedeutet, dass über den Umrichter erheblich kleinere Leistungen bereitzustellen sind und dieser somit erheblich kleiner ausgeführt werden kann, was zu Kosteneinsparungen führt.

Wichtig für eine effiziente Auslegung der Anordnung ist die Festlegung der Drehzahl des kinetischen Energiespeichers in Form der ersten elektrischen Maschine.

Insbesondere ist ein Wicklungsverhältnis der als Schleifringläufer ausgeführten Asynchronmaschine entsprechend Leistungsanforderungen des Systems und eines notwendigen Drehzahlstellbereichs des Systems in Bezug auf eine Dimensionierung des Umrichters optimal festgelegt. Die Asynchronmaschine weist sowohl eine Rotorwicklung als auch eine Ständerwicklung auf, wobei das Wicklungsverhältnis die Anzahl der Windungszahlen der Rotor- und Ständerwicklung zueinander beschreibt. In einer weiteren Ausgestaltung der Erfindung weist der kinetische Energiespeicher ein zusätzliches Schwungrad auf. Je nach gewünschter kinetischer Energie ist ggf. ein Schwungrad mit der ersten elektrischen Maschine und der Speisemaschine des kinetischen Energiespeichers mechanisch koppelbar.

Durch die erfindungsgemäße Anordnung kann die Dimensionierung des benötigten Umrichters erheblich verkleinert und somit die Gesamtkosten der Anordnung gesenkt werden. Da der Leistungsbedarf bei großen Produktions- oder Werkzeugmaschinen durchaus im Megawatt-Bereich liegt, ist das Einsparvolumen entsprechend groß.

Die drehzahlvariable Leistungszuführung durch verschleißfreie direkte Kopplung des kinetischen Energiespeichers mit der elektrischen Antriebsmaschine stellt ein im Vergleich zu mechanischen Lösungen einfaches und somit robustes System dar. Durch den speziellen Aufbau der Anordnung können trotzdem prozessbedingte Leistungsspitzen vom Netz ferngehalten werden.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine erste erfindungsgemäße Anordnung in schematischer Darstellung,
- FIG 2: eine zweite erfindungsgemäße Anordnung in schematischer Darstellung und
- FIG 3: eine Drehzahlfestlegung des kinetischen Energiespei- chers.

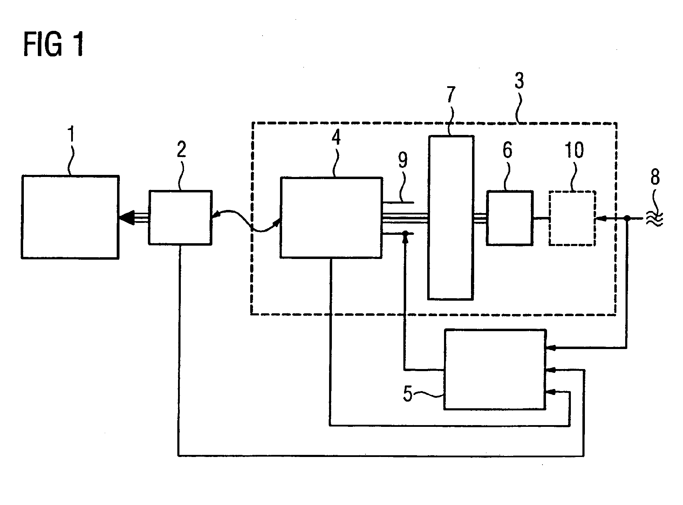

FIG 1 zeigt einen schematischen Aufbau einer ersten erfindungsgemäßen Anordnung. Die erfindungsgemäße Anordnung weist ein System 1 auf, welches mechanische Leistung aufnimmt. Das System 1 ist z.B. eine Produktionsmaschine, die einen Umformprozess durchführt.

Die erforderliche mechanische Leistung wird dem System 1 über eine elektrische Antriebsmaschine 2 zugeführt. Die elektrische Antriebsmaschine 2 ist gemäß diesem Ausführungsbeispiel eine elektrische Synchronmaschine, insbesondere Synchronmotor, wobei auch mehrere Synchronmotoren angeordnet sein können.

Ferner weist die Anordnung einen kinetischen Energiespeicher 3 auf, welcher in diesem Ausführungsbeispiel umfasst:
- eine erste elektrische Maschine 4,
- ein Schwungrad 7 und
- eine elektrische Speisemaschine 6.

Die erste elektrische Maschine 4 ist als Asynchronmaschine, insbesondere Schleifringläufer, ausgebildet. Mit dem Bezugszeichen 9 ist der Schleifring bezeichnet. Die elektrische Speisemaschine 6 ist ebenfalls als Asynchronmaschine ausgeführt.

Die Anzahl an ersten elektrischen Maschinen 4, Speisemaschinen 6 und Schwungrädern 7 ist je nach gewünschter Energiemenge beliebig wählbar.

Die Speisemaschine 6 dient zur kontinuierlichen Leistungsspeisung des kinetischen Energiespeichers 3. Die elektrische Speisemaschine 6 ist wahlweise ohne Drehzahlregelung direkt an einem Drehstromnetz 8 oder mit Drehzahlregelung über einen weiteren Umrichter 10 betreibbar. Daher ist der weitere Umrichter 10 mittels gestrichelten Linien dargestellt.

Ferner weist die Anordnung einen Umrichter 5 auf, der zur Drehzahlregelung der elektrischen Antriebsmaschine 2 vorgesehen ist. Insbesondere dient der Umrichter 5 zur flexiblen Einstellung der Rotorfrequenz der als Asynchronmaschine ausgebildeten ersten elektrischen Maschine 4. Aus diesem Grund ist diese Asynchronmaschine als Schleifringläufer mit Schleifring 9 ausgestaltet.

Das System 1 bzw. der darin ablaufende Prozess benötigt in bestimmten Prozessabschnitten sehr hohe Leistungen. Erfindungsgemäß ist die erste elektrische Maschine 4 mit der elektrischen Antriebsmaschine 2 elektrisch verbunden, wobei die im kinetischen Energiespeicher 3 gespeicherte Energie bedarfsweise von der ersten elektrischen Maschine 4 in elektrische Energie gewandelt, über einen Umrichter 5 frequenzangepasst und dann an die Antriebsmaschine 2 geleitet wird, welche anschließend das System 1 mit mechanischer Leistung versorgt. Über die Frequenzanpassung mittels des Umrichters 5 wird die Drehzahlregelung der elektrischen Antriebsmaschine 2 realisiert.

Die gesamte benötige Leistung des Systems 1 wird somit auf den kinetischen Energiespeicher 3 und den Umrichter 5 aufgeteilt, wodurch der Umrichter 5 erheblich verkleinert werden kann.

Zwischen erster elektrischer Maschine 4, Schwungrad 7 und Speisemaschine 6 bestehen jeweils mechanische Verbindungen (gemäß FIG 1 doppelte Linie).

Zwischen elektrischer Antriebsmaschine 2 und erster elektrischer Maschine 4 besteht eine elektrische Verbindung (gemäß FIG 1 einfache Linie), wobei insbesondere die Ständerwicklungen der beiden elektrischen Maschinen elektrisch verbunden sind. Auch zwischen Speisemaschine 6 und Drehstromnetz 8 sowie ggf. weiterem Umrichter 10 besteht eine elektrische Verbindung.

Der Umrichter 5 ist elektrisch mit dem Drehstromnetz 8 und der ersten elektrischen Maschine 4, insbesondere dem Schleifring 9, verbunden. Ferner besteht zwischen elektrischer Antriebsmaschine 2, erster Maschine 4 und Umrichter 5 jeweils eine Signalleitung zur Regelung der Drehzahl (Anpassung der elektrischen Frequenz).

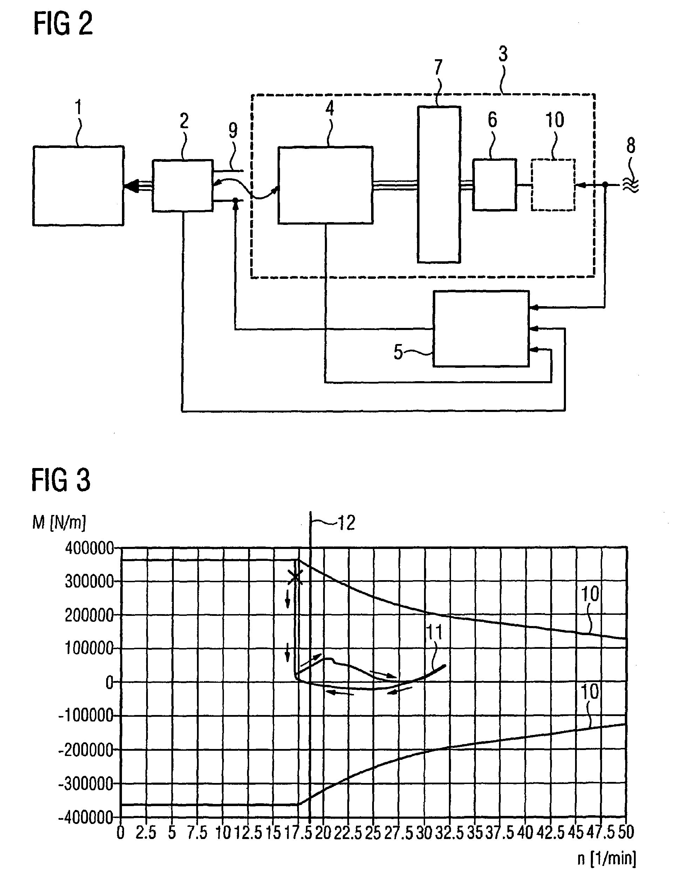

FIG 2 zeigt einen schematischen Aufbau einer zweiten erfindungsgemäßen Anordnung.

Wie bereits ausgeführt, stellen die elektrische Antriebsmaschine 2 und die erste elektrische Maschine 4 des kinetischen Energiespeichers 3 eine Kombination aus Synchronmaschine und Asynchronmaschine dar.

Gemäß FIG 1 ist die Antriebsmaschine 2 als Synchronmaschine und die erste elektrische Maschine 4 als Asynchronmaschine (Schleifringläufer) ausgebildet.

Gemäß FIG 2 ist nun die Antriebsmaschine 2 als Asynchronmaschine, insbesondere Schleifringläufer mit Schleifring 9, ausgebildet und die erste elektrische Maschine 4 des kinetischen Energiespeichers 2 als Synchronmaschine.

Wichtig ist, dass eine Kombination von Synchron- und Asynchronmaschine angeordnet ist. Grundsätzlich erfolgt die Leistungsübertragung vom kinetischen Energiespeicher 3 an die elektrische Antriebsmaschine 2 dadurch, dass die erste elektrische Maschine 4 des Energiespeichers 3 übersynchron zur elektrischen Antriebsmaschine 2 betrieben wird und somit als elektrischer Generator wirkt. Hierdurch wird die kinetisch gespeicherte Energie dem System 1 zugeführt.

Im Übrigen entspricht die Anordnung gemäß FIG 2 der Anordnung gemäß FIG 1.

FIG 3 zeigt ein Diagramm für eine Drehzahlfestlegung der ersten elektrischen Maschine 4 des kinetischen Energiespeichers 3. Die erste elektrische Maschine 4 ist als Asynchronmaschine ausgebildet und somit ist das Diagramm für die erfindungsgemäße Anordnung gemäß FIG 1 vorgesehen.

Die x-Achse (Abszisse) des Diagramms zeigt die Drehzahl der elektrischen Antriebsmaschine 2 und die y-Achse (Ordinate) das Drehmoment der elektrischen Antriebsmaschine 2.

Die Prozesskennlinie 11 zeigt eine Momentenkennlinie eines typischen Umformprozesses. Dabei ist der zeitliche Ablauf des Umformprozesses mittels der Pfeile nachgebildet. Die senkrechten Pfeile zeigen das unmittelbare Umformmoment, wobei sich dann die Abbremsphase anschließt und dann auf eine Beschleunigungsphase wieder der Umformschritt folgt usw.

Mit dem Bezugszeichen 10 ist die Motormomentenkennlinie der elektrischen Antriebsmaschine 2 dargestellt. Die Kennlinie 12 zeigt die Festlegung der Drehzahl für die erste elektrische Maschine 4.

Wichtig für eine effiziente Auslegung des kinetischen Energiespeichers 3 ist die Festlegung der Drehzahl-Kennlinie 12 der ersten elektrischen Maschine 4. Zur flexiblen Drehzahleinstellung (Schlupfeinstellung) muss die sich aus der mechanischen Drehfrequenz der ersten elektrischen Maschine 4 ergebende elektrische Rotorfrequenz über den Umrichter 5 im Drehzahlbereich der Prozesskennlinie 11 verschoben werden. Es ist umso mehr Umrichterleistung nötig, je größer der Betrag der Frequenzverschiebung und je größer die dabei vom System 1 bzw. dem Prozess geforderte Leistung ist. Abhängig vom Prozess 11 kann somit durch geeignete Drehzahlfestlegung der ersten elektrischen Maschine 4 für eine minimal notwendige Umrichterleistung gesorgt werden.

## Patentansprüche

1. Anordnung zur Leistungszuführung an ein System (1) mit einem System (1), welches mechanische Leistung aufnimmt, mit einer elektrischen Antriebsmaschine (2), welche mechanische Leistung an das System (1) abgibt,
mit einem kinetischen Energiespeicher (3), welcher eine erste elektrische Maschine (4) aufweist, die mit der elektrischen Antriebsmaschine (2) elektrisch verbunden ist,
wobei der kinetische Energiespeicher (3) seine gespeicherte kinetische Energie über die erste elektrische Maschine (4) und die elektrische Antriebsmaschine (2) an das System (1) abgibt,
**dadurch gekennzeichnet, dass**
die elektrische Antriebsmaschine (2) und die erste elektrische Maschine (4) jeweils eine Ständerwicklung aufweisen, wobei die beiden Ständerwicklungen der elektrischen Antriebsmaschine (2) und der ersten elektrischen Maschine (4) direkt elektrisch verbunden sind.

2. Anordnung zur Leistungszuführung an ein System (1) nach Anspruch 1, wobei die elektrische Antriebsmaschine (2) und die erste elektrische Maschine (4) eine Kombination aus Synchronmaschine und Asynchronmaschine sind.

3. Anordnung zur Leistungszuführung an ein System (1) nach Anspruch 2, wobei die Asynchronmaschine als Schleifringläufer ausgebildet ist.

4. Anordnung zur Leistungszuführung an ein System (1) nach einem der vorhergehenden Ansprüche, wobei die elektrische Antriebsmaschine (2) eine variable Drehzahlregelung aufweist.

5. Anordnung zur Leistungszuführung an ein System (1) nach Anspruch 4, wobei ein Umrichter (5) zur variablen Drehzahlregelung der elektrischen Antriebsmaschine (2) vorgesehen ist.

6. Anordnung zur Leistungszuführung an ein System (1) nach Anspruch 5, wobei mittels des Umrichters (5) eine elektrische Frequenz der als Schleifringläufer ausgeführten elektrischen Asynchronmaschine einstellbar ist.

7. Anordnung zur Leistungszuführung an ein System (1) nach Anspruch 6, wobei Richtung und Intensität eines Leistungsflusses zwischen elektrischer Antriebsmaschine (2) und erster elektrischer Maschine (4) über eine Verschiebung der elektrischen Frequenz des Schleifringläufers gegenüber einer elektrischen Frequenz der Synchronmaschine mittels des Umrichters (5) variabel einstellbar ist.

8. Anordnung zur Leistungszuführung an ein System (1) nach einem der vorhergehenden Ansprüche, wobei ein bidirektionaler Leistungsfluss zwischen dem System (1) und dem kinetischen Energiespeicher (3) realisiert ist, welcher insbesondere vom System (1) geforderte Leistungsspitzen von einem Netz (8) fernhält.

9. Anordnung zur Leistungszuführung an ein System (1) nach einem der vorhergehenden Ansprüche, wobei der kinetische Energiespeicher (3) eine elektrische Speisemaschine (6) aufweist, welche zur kontinuierlichen Leistungsspeisung des kinetischen Energiespeichers (3) dient.

10. Anordnung zur Leistungszuführung an ein System (1) nach Anspruch 9, wobei die elektrische Speisemaschine (6) wahlweise ohne Drehzahlregelung direkt an dem Netz (8) oder mit Drehzahlregelung über einen weiteren Umrichter (10) betrieben ist.

11. Anordnung zur Leistungszuführung an ein System (1) nach Anspruch 9 oder 10, wobei die elektrische Speisemaschine (6) als Asynchronmaschine, insbesondere als Kurzschlussläufer, ausgebildet ist.

12. Anordnung zur Leistungszuführung an ein System (1) nach einem der vorhergehenden Ansprüche, wobei der kinetische Energiespeicher (3) ein zusätzliches Schwungrad (7) aufweist.

## Claims

1. Arrangement for supplying power to a system (1),
having a system (1) which receives mechanical power,
having an electric drive machine (2) which delivers mechanical power to the system (1),
having a kinetic energy storage (3) which has a first electric machine (4) which is electrically connected to the electric drive machine (2),
wherein the kinetic energy storage (3) delivers its stored kinetic energy to the system (1) via the first electric machine (4) and the electric drive machine (2),
**characterised in that**
the electric drive machine (2) and the first electric machine (4) each have a stator winding, wherein the two stator windings of the electric drive machine (2) and of the first electric machine (4) are directly electrically connected.

2. Arrangement for supplying power to a system (1) according to claim 1, wherein the electric drive machine (2) and the first electric machine (4) are a combination of synchronous and asynchronous machine.

3. Arrangement for supplying power to a system (1) according to claim 2, wherein the asynchronous machine is designed as a slip-ring rotor.

4. Arrangement for supplying power to a system (1) according to one of the preceding claims, wherein the electric drive machine (2) has a variable speed control.

5. Arrangement for supplying power to a system (1) according to claim 4, wherein an inverter (5) is provided for the variable speed control of the electric drive machine (2).

6. Arrangement for supplying power to a system (1) according to claim 5, wherein an electrical frequency of the electric asynchronous machine designed as a slip-ring rotor can be adjusted by means of the inverter (5).

7. Arrangement for supplying power to a system (1) according to claim 6, wherein the direction and intensity of a power flow between electric drive machine (2) and first electric machine (4) can be variably adjusted by means of the inverter (5) via a displacement of the electrical frequency of the slip-ring rotor compared to an electrical frequency of the synchronous machine.

8. Arrangement for supplying power to a system (1) according to one of the preceding claims, wherein a bi-directional power flow between the system (1) and the kinetic energy storage (3) is realised, which in particular protects a grid (8) from power peaks required by the system (1).

9. Arrangement for supplying power to a system (1) according to one of the preceding claims, wherein the kinetic energy storage (3) has an electric supply machine (6) which serves for the continuous power supply of the kinetic energy storage (3).

10. Arrangement for supplying power to a system (1) according to claim 9, wherein the electric supply machine (6) is optionally operated without speed control directly on the grid (8) or with speed control via a further inverter (10).

11. Arrangement for supplying power to a system (1) according to claim 9 or 10, wherein the electric supply machine (6) is designed as an asynchronous machine, in particular a squirrel cage.

12. Arrangement for supplying power to a system (1) according to one of the preceding claims, wherein the kinetic energy storage (3) has an additional flywheel (7).

## Revendications

1. Dispositif d'alimentation en puissance d'un système ( 1 ), comprenant un système (1), qui absorbe de la puissance mécanique, une machine (2) d'entraînement électrique, qui cède de la puissance mécanique au système ( 1 ),
comprenant un accumulateur ( 3 ) d'énergie cinétique, qui a une première machine ( 4 ) électrique reliée électriquement à la machine ( 2 ) d'entraînement électrique,
dans lequel l'accumulateur ( 3 ) d'énergie cinétique cède son énergie cinétique accumulée au système ( 1 ) en passant par la première machine (4) électrique et par la machine ( 2 ) d'entraînement électrique,
**caractérisé en ce que**
la machine ( 2 ) d'entraînement électrique et la première machine (4) électrique ont respectivement un enroulement statorique,
dans lequel les deux enroulements statoriques de la machine ( 2 ) d'entraînement électrique et de la première machine ( 4 ) électrique sont reliés électriquement directement.

2. Dispositif d'alimentation en puissance d'un système ( 1 ) suivant la revendication 1, dans lequel la machine ( 2 ) d'entraînement électrique et la première machine ( 4 ) électrique sont une combinaison d'une machine synchrone et d'une machine asynchrone.

3. Dispositif d'alimentation en puissance d'un système ( 1 ) suivant la revendication 2, dans lequel la machine asynchrone est constituée sous la forme d'un rotor à bague.

4. Dispositif d'alimentation en puissance d'un système ( 1 ) suivant l'une des revendications précédentes, dans lequel la machine ( 2 ) d'entraînement électrique a une régulation de vitesse de rotation variable.

5. Dispositif d'alimentation en puissance d'un système ( 1 ) suivant la revendication 4, dans lequel il est prévu un convertisseur ( 5 ) pour la régulation de vitesse de rotation variable de la machine ( 2 ) d'entraînement électrique.

6. Dispositif d'alimentation en puissance d'un système ( 1 ) suivant la revendication 5, dans lequel une fréquence électrique de la machine asynchrone électrique réalisée sous la forme d'un rotor à bague peut être réglée au moyen du convertisseur ( 5 ).

7. Dispositif d'alimentation en puissance d'un système ( 1 ) suivant la revendication 6, dans lequel la direction et l'intensité d'un flux de puissance entre la machine ( 2 ) d'entraînement électrique et la première machine ( 4 ) électrique peuvent être réglées de manière variable par un décalage de la fréquence électrique du rotor à bague par rapport à une fréquence électrique de la machine synchrone au moyen du convertisseur ( 5 ).

8. Dispositif d'alimentation en puissance d'un système ( 1 ) suivant l'une des revendications précédentes, dans lequel il est réalisé, entre le système ( 1 ) et l'accumulateur ( 3 ) d'énergie cinétique, un flux de puissance bidirectionnel, qui éloigne d'un réseau (8) des pointes de puissance exigées notamment par le système ( 1 ).

9. Dispositif d'alimentation en puissance d'un système ( 1 ) suivant l'une des revendications précédentes, dans lequel l'accumulateur ( 3 ) d'énergie cinétique a une machine ( 6 ) d'alimentation électrique, qui sert à alimenter continuellement en puissance l'accumulateur (3) d'énergie cinétique.

10. Dispositif d'alimentation en puissance d'un système ( 1 ) suivant la revendication 9, dans lequel la machine ( 6 ) d'accumulation électrique fonctionne au choix sans régulation de la vitesse de rotation directement sur le réseau ( 8 ) ou avec régulation de la vitesse de rotation par un autre convertisseur ( 10 ).

11. Dispositif d'alimentation en puissance d'un système ( 1 ) suivant la revendication 9 ou 10, dans lequel la machine ( 6 ) d'alimentation électrique est constituée sous la forme d'une machine asynchrone, notamment sous la forme d'un rotor en court-circuit.

12. Dispositif d'alimentation en puissance d'un système ( 1 ) suivant l'une des revendications précédentes, dans lequel l'accumulateur (3) d'énergie cinétique a un volant ( 5 ) supplémentaire.
